# EUROPÄISCHE PATENTSCHRIFT

(11) **EP 3 492 738 B1**
(45) Veröffentlichungstag und Bekanntmachung des Hinweises auf die Patenterteilung: **17.08.2022**
(21) Anmeldenummer: 18208471.5
(22) Anmeldetag: 27.11.2018
(51) Int. Cl.: F03D 80/00, F03D 80/70, F03D 80/80, H02K 11/20, H02K 11/02, F16C 19/52, F16C 41/00

(54) **WINDENERGIEANLAGE MIT LAGERSTROMDÄMPFUNG**
WIND TURBINE WITH BEARING CURRENT DAMPING
ÉOLIENNE À ATTÉNUATION DE COURANT DE PALIER

(30) Priorität: 29.11.2017 DE 102017011044
(43) Veröffentlichungstag der Anmeldung: 05.06.2019
(73) Patentinhaber: Siemens Gamesa Renewable Energy Service GmbH, 20097 Hamburg (DE)
(72) Erfinder: Letas, Heinz-Hermann, 24796 Bovenau (DE)
(74) Vertreter: Glawe, Delfs, Moll

(56) Entgegenhaltungen:
- EP-A1- 2 908 411
- WO-A1-2008/116433
- DE-A1-102010 002 294
- DE-B- 1 102 271
- FR-A1- 2 944 164
- US-A1- 2014 324 236

## Beschreibung

Die Erfindung betrifft eine Windenergieanlage mit beweglichen und stationären Komponenten einschließlich einem Windrotor, Generator mit Umrichter sowie Maschinenträger. Bewegliche Komponenten sind über Maschinenlager (Wälz-/Gleitlager) an stationären Komponenten angeordnet, wobei ein zu schützendes Maschinenlager mit einem Potenzialschutz versehen ist. Dieser dient dazu, einen parasitären Stromfluss durch das Maschinenlager zu verhindern.

Windenergieanlagen mit ihren in der Gondel angeordneten leistungsstarken Generatoren und Umrichter verlangen einen effektiven elektrischen Schutz. Es ist daher erforderlich, Schutzleiter sowie metallische Masseverbindungen vorzusehen, die mit gewissen Strukturelementen der Windenergieanlage verbunden sein müssen. Auf diese Weise kann ein Potenzialausgleich und damit ein Personenschutz (vor gefährlichem elektrischem Schlag) erreicht werden.

Bei modernen Windenergieanlagen mit ihrem Umrichter tritt die Problematik auf, dass die Umrichter durch ihr hochfrequentes Schalten großer Ströme magnetische oder kapazitive Einkoppelungen hervorrufen, wodurch Ableitströme entstehen und somit an Impedanzen der Schutzleiter und Masseleiter Spannungsabfälle erzeugen. Das führt im Ergebnis dazu, dass der Maschinenträger oder andere metallische Strukturelemente nicht das gewünschte ruhende und möglichst überall gleiche Potenzial aufweisen.

Die so entstehenden, unerwünschten Potenzialdifferenzen führen zu einer höheren Beanspruchung von Lagern und deren Isolation (insbesondere Schmierfilm) und verursachen parasitäre Ströme durch diese hindurch, falls das Lager nicht isoliert ist. Schädlich sind insbesondere solche Ströme, die Funken bilden und damit Material transportieren. Die Geometrie der Lager verändert sich dadurch und das Lager wird beschädigt bzw. fällt langfristig aus. Diese Wirkung ist keineswegs nur auf kleine Lager beschränkt, sondern kann auch große Wälzlager betreffen und beschädigen. Gerade Kugellager sind empfindlich gegenüber solchen unerwünschten Strombelastungen. Dies betrifft einige der wichtigsten Lager von Windenergieanlagen, darunter die Hauptlager der Windenergieanlage in der Gondel.

Zum Schutz vor diesen unerwünschten Wirkungen sind diverse Maßnahmen im Stand der Technik bekannt. Eine Maßnahmengruppe besteht darin, das elektrische System durch geeignete Erdung, Leitungsführung sowie Potenzial-Ausgleichsmaßnahmen so zu gestalten, dass es von Haus aus zu einer Verminderung der parasitären Effekte im elektrischen System führt. Damit soll die Entstehung von Anfang an eingedämmt werden. Eine andere Maßnahmengruppe besteht darin, dass an den gefährdeten Lagern durch passive Maßnahmen das Fließen parasitärer Ströme möglichst unterbunden wird. Dazu zählen Maßnahmen wie Isolation des Lagers oder das Schaffen von Bypasswegen für den Strom am Lager vorbei. Derartige passive Maßnahmen sollen die Entstehung störender Lagerströme vermindern; eine echte Vermeidung wird meist nicht erreicht.

Ein Nachteil dieser passiven Maßnahmen liegt darin, dass sie verhältnismäßig aufwendig sind. Häufig muss bereits bei der Konstruktion der Windenergieanlage auf sie Rücksicht genommen werden. Auch die Schaffung von Bypasswegen ist aufwendig und kann schon allein aus Bauraumgründen nicht immer nachträglich erfolgen. Derartige passive Maßnahmen sind begrenzt bezüglich ihrer Wirksamkeit und ihrer Anwendbarkeit (nämlich meist nur in früher Konstruktionsphase). Ein nachträglicher Schutz kann damit kaum erreicht werden. Dies ist unbefriedigend, zumal kritische Stellen häufig nicht im Vorfeld erkannt werden. Ein Beispiel aus dem Stand der Technik wird in EP 2 908 411 A1 offenbart.

Der Erfindung liegt die Aufgabe zugrunde, diese Nachteile durch ein flexibleres System zu vermeiden, welches sich vorzugsweise auch besser zur nachträglichen Anbringung eignet. Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit beweglichen und stationären Komponenten einschließlich einem Windrotor, Generator mit Umrichter sowie Maschinenträger, wobei bewegliche Komponenten über Maschinenlager an stationären Komponenten angeordnet sind, und eine Potentialschutzeinrichtung für mindestens ein zu schützendes Maschinenlager vorgesehen ist, die ausgebildet ist zur Verringerung eines parasitären Stromflusses durch das Maschinenlager, ist erfindungsgemäß vorgesehen, dass die Potentialausgleichseinrichtung als eine aktive Lagerstromdämpfungseinheit ausgeführt ist, welche eine Potentialdifferenz über das zu schützende Maschinenlager erfasst, darauf basierend eine entgegengerichtete Kompensationsspannung mittels eines Stellglieds erzeugt und am zu schützenden Maschinenlager einspeist.

Die Erfindung beruht auf dem Gedanken, den unerwünschten parasitären Strom nicht nur als Problem aufzufassen, sondern zu einem Teil der Lösung zu machen. Dies gelingt in der Weise, indem dieser Strom bzw. die durch ihn hervorgerufene Potenzialdifferenz über das zu schützende Maschinenlager erfasst wird, um so eine entgegengerichtete Kompensationsspannung zu bestimmen. Diese wird dann mittels einer geeigneten Einrichtung erzeugt und vor Ort, nämlich am Maschinenlager bzw. dessen Umgebungsstruktur, eingespeist. Somit wird die unerwünschte Potenzialdifferenz über das Maschinenlager idealerweise kompensiert und unwirksam gemacht. Der parasitäre Strom verschwindet (bzw. verringert sich erheblich). Es sind keine besonderen baulichen Maßnahmen erforderlich, außer dass in dem Bereich des zu schützenden Maschinenlagers eine zusätzliche Spannung injiziert werden muss. Da dies keine besonderen Ansprüche an einen Bauraum stellt, kann diese in der Regel auch nachträglich ohne größere Probleme hinzugefügt werden.

Die Erfindung geht damit einen anderen Weg als die bisherigen Maßnahmen und leistet auf verblüffend simple Weise durch den Einsatz einer kompensatorischen Gegenspannung eine so einfache wie wirksame Verminderung (bzw. Verhinderung) des parasitären Stromflusses über das zu schützende Lager.

Nachfolgend seien zuerst einige verwendete Begriffe erläutert:
Unter einem Maschinenlager wird ein Wälz- oder Gleitlager verstanden zwischen zwei relativ zueinander beweglichen Maschinenteilen. Die Lager übertragen Kräfte und führen die Maschinenteile. Die Beweglichkeit kann rotatorisch und/oder linear sein. Umfasst sind also sowohl Maschinenlager wie auch Linearlager.

Unter einem Lagerstrom wird der parasitäre Strom durch ein zu schützendes Maschinenlager verstanden. Entsprechend wird unter einer Lagerspannung die durch den parasitären Strom hervorgerufene Potenzialdifferenz über das zu schützende Maschinenlager verstanden.

Zweckmäßigerweise weist die aktive Lagerstromdämpfungseinheit einen Regler auf, an dessen Eingang ein Signal für einen Lagerstrom und/oder Lagerspannung des zu schützenden Maschinenlagers angelegt ist und an dessen Ausgang ein Verstärker zum Ansteuern des Stellgliedes angeschlossen ist. Damit kann eine je nach den Anforderungen gezielte Beaufschlagung des zu schützenden Maschinenlagers mit der kompensatorischen Gegenspannung erreicht werden. Ferner ermöglicht dies eine abgesetzte Anordnung des Reglers, wodurch eine konzentrierte Anordnung der Regler erreicht werden kann, wenn mehrere Maschinenlager auf diese Weise zu schützen sind. Zweckmäßigerweise sind dazu Signalleitungen am Eingang des Reglers in geschirmter Ausführung vorgesehen, deren Schirmung vorzugsweise sowohl gegen elektrostatische Felder wie auch gegen elektromagnetische Felder wirksam ist.

Mit Vorteil ist das Stellglied als ein Transformator ausgeführt, der benachbart des zu schützenden Maschinenlagers angeordnet ist. Dieser wird von dem Regler primärseitig angesteuert, sodass auf der Sekundärseite eine Zusatzspannung entsteht, die unerwünschte Potenzialdifferenz über das Maschinenlager kompensiert und somit parasitären Stromfluss durch das Maschinenlager verhindert.

Vorzugsweise ist der Transformator so ausgeführt, dass dessen Sekundärseite zumindest teilweise gebildet ist von einer Umgebungsstruktur des zu schützenden Maschinenlagers. Es kann so durch den Transformator ein Strom unmittelbar an dem zu schützenden Maschinenlager in die Struktur injiziert werden. Die gewünschte Kompensation wird dadurch sozusagen direkt an der Stelle erzeugt, an der sie erwünscht ist. Zusätzliche sekundärseitige Verkabelung, die aufwendig ist und Bauraum erfordert, wird dadurch vermieden. Außerdem kann Material gespart werden, indem die ohnehin vorhandene Umgebungsstruktur als Sekundärkomponente des Transformators fungiert. Mit Vorteil ist dabei die Anordnung des Transformators so, dass die Umgebungsstruktur elektrisch leitend und zweckmäßigerweise magnetisch ist. Damit kann die Umgebungsstruktur die Sekundärwicklung bzw. den Magnetkern des Transformators sekundärseitig zumindest teilweise ersetzen.

Mit Vorteil ist der Transformator als eine Aufsteckeinheit ausgeführt, und zwar zweckmäßigerweise mit einem teilbaren Kern. Dies ermöglicht eine besonders einfache Montageanordnung des Transformators auf vorhandenen, insbesondere hervorstehenden Strukturteilen.

Optional ist ein Transformator vorgesehen, der eine Tertiärwicklung aufweist. Damit kann die sekundärseitig von dem Transformator abgegebene Spannung mit hoher Genauigkeit ermittelt werden, und zwar ohne dass dafür besonderer Zusatzaufwand anfällt.

Zweckmäßigerweise ist eine Vorsteuereinheit vorgesehen, die mit der Betriebssteuerung der Windenergieanlage verbunden ist und anhand von Signalen zum Betriebszustand der Windenergieanlage auf den Regler einwirkt. Somit kann der Lagerstrom abhängig von dem Betriebszustand geregelt werden. Dies ermöglicht ein flexibleres, schnelleres und zielgenaues Reagieren auf wechselnde Betriebszustände der Windenergieanlage.

Weiter kann vorgesehen sein, dass eine Korrelation der Kompensation mit anderen Betriebsdaten mittels einer Korrelationseinheit durchgeführt wird, insbesondere: von der Windenergieanlage erzeugte Leistung, Netzparameter wie Netzspannung oder Netzfrequenz, und/oder Aktivität von anderen elektrischen Betriebsmitteln der Windenergieanlage. Dies ermöglicht eine bessere Zuordnung von Ursachen bzw. Wirkungen der zu kompensierenden Lagerströme. Insgesamt wird damit eine effektivere Bekämpfung der unerwünschten Lagerströme erreicht. Ferner kann ein mit der Lagerstromdämpfungseinheit zusammenwirkendes Überwachungsmodul vorgesehen sein, dass ausgebildet ist für eine Langzeitüberwachung der Kompensationssignale. Damit können sich über längere Zeiträume ergebende Trends erfasst werden. Vorzugsweise wirkt es mit einem Detektormodul zusammen, welches basierend darauf ein Warnsignal bei einem kritischen Zustand des Maschinenlagers generiert.

Mit Vorteil ist ein Modul für zustandsabhängige Wartung vorgesehen, welches mit dem Überwachungsmodul und/oder der Korrelationseinheit zusammenwirkt. Damit kann die Wartung insbesondere von kritischen Bauelementen, wie Hauptlagern der Rotorwelle, den Schwenklagern der Rotorblätter und/oder dem Maschinenlager der Gondel auf den Turm zielgerichteter erfolgen, was unnötigen Aufwand und unnötige Standzeiten erspart.

Es ist zweckmäßig, ein eigenes Stellglied für jedes zu schützende Maschinenlager vorzusehen. Damit kann individuell auf das jeweilige Maschinenlager eingewirkt werden. Die Regler können hierbei zusammengefasst werden, insbesondere zu einer mehrkanaligen Regelung.

Signalleitungen von dem zu schützenden Maschinenlager zu dem Regler sind vorzugsweise geschirmt ausgeführt. Hierbei ist die Schirmung so gestaltet, dass sie zweckmäßigerweise einen Schutz sowohl gegen elektrostatische wie auch gegen elektromagnetische Felder bietet. Zur Strommessung ist vorzugsweise ein zusätzlicher Masseschirm vorgesehen.

Die Erfindung erstreckt sich ferner auf ein entsprechendes Verfahren. Ferner erstreckt sich die Erfindung auf einen entsprechenden Nachrüstsatz für bereits bestehende Windenergieanlagen. Nachfolgend wird die Erfindung beispielhaft unter Bezugnahme auf eine vorteilhafte Ausführungsform erläutert. Es zeigen:
- Fig. 1: eine schematisierte Darstellung einer Windenergieanlage mit ihrem Leistungsstrang;
- Fig. 2: ein Funktionsschaubild zu Lagerströmen in einem Drehlager einer Rotorwelle;
- Fig. 3: ein Funktionsschaubild zu einem Stellglied am Drehlager;
- Fig. 4a, b: Darstellungen zu Spannungs- und Strommessung;
- Fig. 5: ein Ersatzschaltbild zu dem Stellglied mit einem Transformator;
- Fig. 6: ein Ersatzschaltbild zu einem Regler; und
- Fig. 7: ein Blockdiagramm zu einer Kompensationseinrichtung.

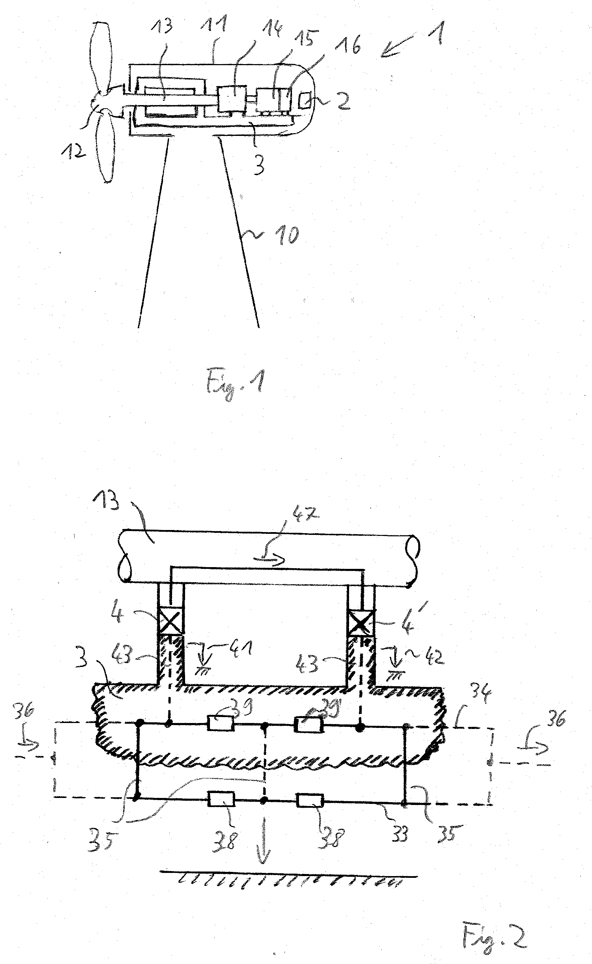

Ein Ausführungsbeispiel für eine Windenergieanlage gemäß der Erfindung ist schematisch in Fig. 1 dargestellt. Die in ihrer Gesamtheit mit der Bezugsziffer 1 bezeichnete Windenergieanlage umfasst einen Turm 10 mit einer Gondel 11, die in Azimutrichtung schwenkbar an dem oberen Ende des Turms 10 angeordnet ist. Stirnseitig weist die Gondel 11 einen Windrotor 12 auf, der über eine Rotorwelle 13 drehbar gelagert ist auf einem Maschinenträger 3. Der Maschinenträger 3 erstreckt sich durch die Gondel 11 und nimmt ferner ein Getriebe 14 auf, an dessen Eingang die Rotorwelle 13 endet. Am Ausgang des Getriebes ist über eine schnelle Welle ein Generator 15 angeordnet. Dieser wirkt mit einem Umrichter 16 zusammen zur Erzeugung elektrischer Leistung.

Ferner in der Gondel 11 angeordnet ist eine Betriebssteuerung 2. Sie ist dazu ausgebildet, den Betrieb der Windenergieanlage 1 und ihrer Komponenten zu überwachen und zu steuern. Ferner sind in der Gondel 11 und im Turm 10 Leitungen zur Übertragung der erzeugten elektrischen Leistung sowie verschiedene Signalleitungen angeordnet, die aus Gründen der Übersicht nicht dargestellt sind. Über eine ebenfalls nicht dargestellte Erdungsleitung ist der Maschinenträger 3 mit den darauf angeordneten Komponenten, insbesondere Rotorwelle 13, Getriebe 14 und Generator 15, geerdet.

In Fig. 2 ist ein Ausführungsbeispiel für eine Lagerung der Rotorwelle 13 auf dem Maschinenträger 3 dargestellt. Die Rotorwelle 13 ist über mehrere Wälzlager 4, 4', wobei beispielsweise das Wälzlager 4 als Festlager und das Wälzlager 4' als Loslager fungiert, auf der Oberseite des Maschinenträgers 3 drehbar gelagert. Die Wälzlager 4, 4' sind angeordnet auf jeweils einem Lagerbock, der eine das jeweilige Wälzlager 4, 4' tragende Umgebungsstruktur 43 bildet.

Der Maschinenträger 3 besteht aus metallischem Material und ist elektrisch leitend ausgeführt; er bildet eine Masse. Die sich so ergebende leitende metallische Masseverbindung ist mit der Bezugsziffer 34 dargestellt, wobei dessen Impedanzen durch die Widerstandselemente 39 im Ersatzschaltbild dargestellt sind. Eine Erdung der Rotorwelle 13 erfolgt über den Maschinenträger 3 mittels eines Schutzleiters 33; dessen Impedanzen sind durch Impedanzelemente 38 als Ersatzschaltbild dargestellt. Daraus ergibt sich insgesamt ein Ableitstrom 36. Der erforderliche Potenzialausgleich zwischen Masse und Erdung wird durch Potenzialausgleichsleiter 35 bewirkt.

Beim Betrieb von Windenergieanlagen kommt es zu magnetischen oder kapazitiven Einkoppelungen, wodurch Ableitströme entstehen, und zwar nicht nur im Maschinenträger 3, sondern auch fließend durch die Komponenten (wie Rotorwelle 13). Das führt dazu, dass auch durch die Lager 4, 4' der Rotorwelle 13 jeweils ein Strom fließt. Der Lagerstrom ist in Fig. 2 insgesamt mit der Bezugsziffer 47 versehen. Er fließt über das Lager 4 von dem Maschinenträger 3 in die Rotorwelle 13, entlang dieser und schließlich über das Lager 4' wieder in den Maschinenträger 3 zurück. Die Rotorwelle 13 bildet somit einen parallelen Leitungspfad zu den eigenen Impedanzen 39 des Maschinenträgers 3.

Durch diesen Ableitstrom kommt es zu Spannungsabfällen an den Impedanzen. Ferner werden die Lager 4, 4' belastet mit dem durch sie fließenden Lagerstrom. Dadurch stellen sich an der Umgebungsstruktur 43 der beiden Lager 4, 4' unterschiedliche Lagerpotenziale 41 bzw. 42 ein. Sie sind ein Abbild des durch die Rotorwelle 13 fließenden Stroms. Derartige Potenzialungleichheiten sind unerwünscht und die durch sie hervorgerufenen parasitären Ströme können zu Beschädigungen der Lager 4, 4' führen.

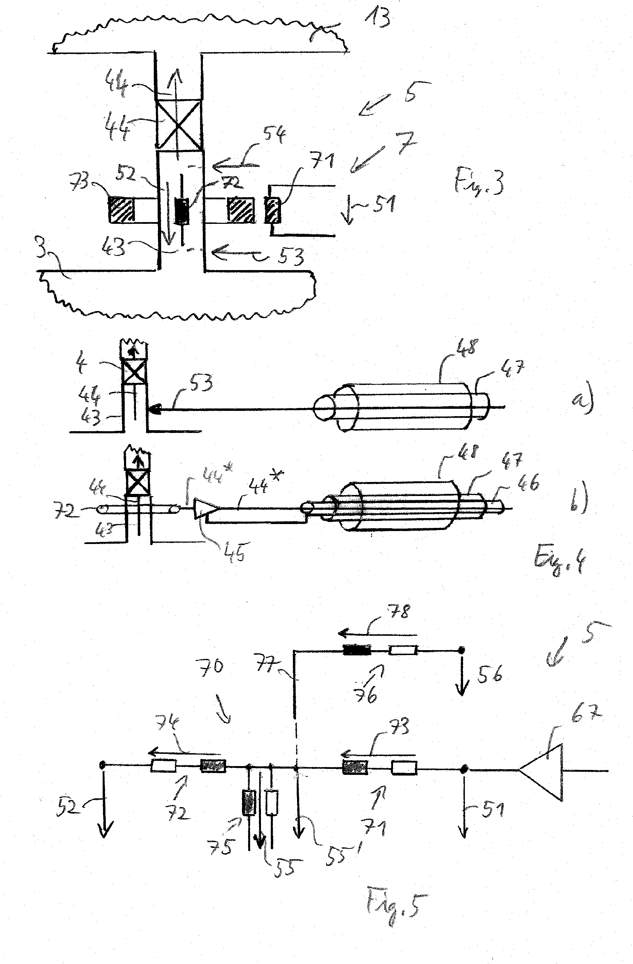

Eine aktive Lagerstromdämpfungseinheit 5 gemäß einem Ausführungsbeispiel der Erfindung ist in den Fig. 3 und 5 dargestellt. Sie ist dazu ausgebildet, die sich über das zu schützende Lager (hier das Drehlager 4) jeweils ergebende Potenzialdifferenz zu erfassen und darauf basierend eine entgegengerichtete Kompensationsspannung zu erzeugen, welche mittels eines Stellglieds 7 in ein zu schützendes Maschinenlager eingespeist wird.

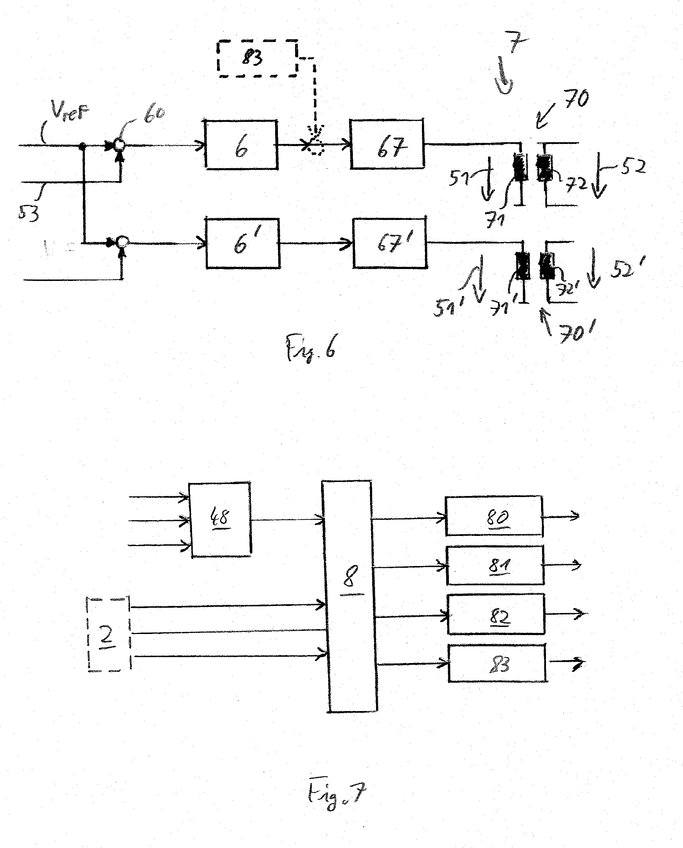

In der Umgebungsstruktur 43 des zu schützenden Lagers 4 wird das durch die parasitären Einkoppelungen gestörte Spannungspotenzial 53 erfasst. Es wird über eine geschirmte Messleitung, die einen äußeren elektromagnetischen Schirm 48 und einen inneren elektrostatischen Schirm 47 aufweist, erfasst (siehe Fig. 4A) und an einem Eingang zu einem Regler 6 angelegt (siehe Fig. 6). Der Regler 6 ist an seinem Eingang mit einer Vergleichsstufe 60 versehen, an die ferner ein Signal für eine Bezugsspannung Vref angelegt ist. Die sich daraus ergebende Differenz wird an den Eingang des Reglers 6 angelegt. Der Regler bestimmt daraus ein zur Kompensation führendes Ausgangssignal, welches an einen Verstärker 67 ausgegeben wird zur Verstärkung und Ausgabe an ein Stellglied 7.

Als Stellglied 7 fungiert ein Transformator 70. Er ist vorzugsweise mit einem klappbaren Kern 73 versehen, sodass er leicht auch nachträglich über die bereits vorhandene Umgebungsstruktur 43 des Lagers montiert werden kann. Der Transformator 70 weist eine Primärspule 71 auf, an die der Verstärker 67 angeschlossen ist. Der Kern 73 ist so ausgeführt, dass er die das Lager 4 tragende Umgebungsstruktur 43 umgibt, sodass die aus elektrisch leitendem Material bestehende Umgebungsstruktur 43 selbst als Sekundärspule 72 fungiert. Damit wird durch die Sekundärspule 72 des Transformators 70 eine Sekundärspannung 52 in der Umgebungsstruktur 43 induziert, und zwar abhängig von der Größe des Ausgangssignals des Verstärkers 67 des Reglers 6. Diese Sekundärspannung 52 ist dem gestörten Spannungspotenzial 53 entgegengerichtet, sodass im Ergebnis ein gesäubertes Spannungspotenzial 54 entsteht, welches am Übergang der Umgebungsstruktur 43 zu dem Lager 4 anliegt. In der Folge verringert sich so der durch das Lager 4 fließende parasitäre Lagerstrom 44.

In Fig. 4B ist eine Alternative zu der Messung des gestörten Spannungspotenzials 53 dargestellt. Alternativ ist vorgesehen eine Messung des an dieser Stelle fließenden (parasitären) Stroms als Messsignal 44*, der über einen Messverstärker 45 und eine geschirmte Messleitung zu dem Eingang des Reglers 6 geführt ist. Diese geschirmte Messleitung ähnelt im Aufbau derjenigen, wie sie bei der Potenzialmessung gemäß Fig. 4A verwendet ist, weist jedoch zusätzlich einen weiteren Innenleiter 46 auf, sodass eine Koaxialleitung gebildet ist.

Ein Ersatzschaltbild für das Stellglied 7 am Ausgang des Reglers 6 ist in Fig. 5 dargestellt. Es zeigt den Reglerverstärker 67 am Ausgang des Reglers 6. Der Regler 6 und dessen Reglerverstärker 67 sind so bemessen, dass sich die gewünschte Frequenzabhängigkeit abhängig von der gemessenen Eingangsgröße (vergleiche Fig. 4A und 4B) ergibt. Dessen Ausgangssignal wird über eine Leitung an die Primärwicklung 71 des Transformators 70 angelegt. Am Eingang der Primärwicklung 71 liegt die Primärspannung 51 an. Durch die Primärwicklung 71 fließt ein Primärstrom 73. Er ist in der Darstellung des Ersatzschaltbilds angeschlossen an eine Haupt-Impedanz 75 sowie die Sekundärwicklung 72. An der Hauptfeld-Impedanz 75 liegt als Potenzial die Hauptfeldspannung 55 an. Der durch die Sekundärwicklung 72 fließende Sekundärstrom ist mit der Bezugsnummer 74 versehen, und führt am Ausgang des Transformators 70 zur Abgabe einer Sekundärspannung 52.

Optional kann vorgesehen sein, den Transformator 70 mit einer Messspule zu versehen. Dies ist im oberen Bildteil von Fig. 5 dargestellt. Dazu ist der Transformator 70 mit einer Tertiärwicklung 76 versehen. Sie ist über eine Leitung 77 im Ersatzschaltbild angeschlossen an einen Verknüpfungspunkt zwischen Primärwicklung 71, Sekundärwicklung 72 und Hauptfeld-Impedanz 75. Durch die Tertiärwicklung 76 fließt ein Messstrom 78, woraus eine Messspannung 56 am Anschluss der Tertiärwicklung 76 resultiert. Auf diese Weise wird die Tertiärwicklung hier als Messspannungswicklung eingesetzt. Das kann von Vorteil sein, wenn die Störspannung ausschließlich oder zumindest überwiegend an der Stelle entsteht, an der auch der Transformator angebracht ist.

Zweckmäßigerweise ist ferner eine Kompensationseinrichtung 8 vorgesehen (s. Fig. 7). An ihrem Eingang sind verschiedene Betriebszustand-Signale der Windenergieanlage angelegt, die von der Betriebssteuerung 2 bereitgestellt sind. Ferner sind über ein Netzüberwachungsmodul 48 mehrere Messwerte für die verschiedenen Lagerströme 44 in den verschiedenen Lagern 4, 4' und weiteren Lagern angelegt. Die Kompensationseinrichtung 8 ist mit mehreren Modulen versehen. Dazu zählt ein Modul 80 zur Langzeitüberwachung, welches zu diesem Zweck einen Langzeitspeicher umfasst. Ferner vorgesehen ist ein Korrelationsmodul 81. Es ist dazu ausgebildet, eine Korrelation der gemessenen Lagerströme mit anderen Betriebsdaten vorzunehmen, insbesondere mit dem Leistungsfluss der Windenergieanlage, Netzdaten wie Spannung oder Frequenz, oder auch Aktivität von anderen Betriebsmitteln. Dadurch ist eine bessere Zuordnung von Ursachen der Lagerströme möglich, und damit auch eine effektivere Unterdrückung bzw. Bekämpfung. Vorzugsweise ist ferner ein Wartungsmodul 82 vorgesehen, in dem eine Condition-Monitoring-Funktion (CMS) implementiert ist. Es ist dazu ausgebildet, anhand der Lagerströme bzw. der nach Kompensation verbleibenden Restströme Parameter zu ermitteln, welche eine Indikation über Lagerlebensdauer und/oder vorsorglich erforderliche Wartung generieren, insbesondere zur Übermittlung an eine interne oder externe Service-Schnittstelle. Ferner ist ein Vorsteuerungsmodul 83 vorgesehen, welches die unter Berücksichtigung der Lagerströme ermittelten Daten zur Verbesserung der Betriebsführung an den Regler bzw. dessen Reglerverstärker 67 übermittelt.

Es sei angemerkt, dass insbesondere die Dimensionierung des Transformators 70 entscheidend ist für die Betriebsfrequenz der Lagerstromdämpfungseinheit 5. Je tiefer die Frequenzen der zu bekämpfenden Lagerströme sind, desto größer muss der Transformator 70 dimensioniert sein; dies gilt insbesondere hinsichtlich des Transformatorkerns 73. Es versteht sich, dass reine Gleichstromstörungen auf diese Weise nicht bekämpft werden können, da Transformatoren bei einer Frequenz von Null nicht funktionieren. Auf der anderen Seite können niedrige und mittlere Frequenzen problemlos gedämpft werden, wobei hohe Frequenzen zu entsprechend hohen Anforderungen an die Dynamik der Regelung 6 führen.

## Patentansprüche

1. Windenergieanlage mit beweglichen und stationären Komponenten einschließlich einem Windrotor (12), Generator (15) mit Umrichter (16) sowie Maschinenträger (3), wobei bewegliche Komponenten über Maschinenlager an stationären Komponenten angeordnet sind, und eine Potentialschutzeinrichtung für mindestens ein zu schützendes Maschinenlager (4) vorgesehen ist, die ausgebildet ist zur Verringerung eines parasitären Stromflusses (44) durch das Maschinenlager (4),
**dadurch gekennzeichnet, dass**
die Potentialschutzeinrichtung als eine Potentialausgleichseinrichtung ausgeführt ist, wobei die Potentialausgleichseinrichtung als eine aktive Lagerstromdämpfungseinheit (5) ausgeführt ist, welche eine Potentialdifferenz über das zu schützende Maschinenlager (4) erfasst und darauf basierend eine entgegengerichtete Kompensationsspannung (52) mittels eines Stellglieds (7) erzeugt, wobei die Kompensationsspannung (52) am zu schützenden Maschinenlager (4) eingespeist wird.

2. Windenergieanlage nach Anspruch 1, **dadurch gekennzeichnet, dass** die aktive Lagerstromdämpfungseinheit (5) einen Regler (6) aufweist, an dessen Eingang ein Signal für einen Lagerstrom und/oder Lagerspannung des zu schützenden Maschinenlagers (4) angelegt ist und an dessen Ausgang ein Verstärker (67) zum Ansteuern des Stellglieds (7).

3. Windenergieanlage nach Anspruch 1 oder 2, **dadurch gekennzeichnet, dass** das Stellglied (7) dazu ausgeführt ist, einen Kompensationsstrom (74) am zu schützenden Maschinenlager (4) einzukoppeln, wobei vorzugsweise ein eigenes Stellglied (7) für jedes zu schützende Maschinenlager (4) vorgesehen ist.

4. Windenergieanlage nach einem der vorangehenden Ansprüche, **dadurch gekennzeichnet, dass** das Stellglied (7) als ein Transformator (70) ausgeführt ist, der benachbart des zu schützenden Maschinenlagers (4) angeordnet ist.

5. Windenergieanlage nach Anspruch 4, **dadurch gekennzeichnet, dass** dessen Sekundärseite zumindest teilweise gebildet ist von einer Umgebungsstruktur (43) des zu schützenden Maschinenlagers (4).

6. Windenergieanlage nach Anspruch 5, **dadurch gekennzeichnet, dass** die Umgebungsstruktur (43) elektrisch leitend und vorzugsweise magnetisch ist.

7. Windenergieanlage nach einem der Ansprüche 4 bis 6,
**dadurch gekennzeichnet, dass** der Transformator (70) als eine Aufsteckeinheit ausgeführt ist, die vorzugsweise einen teilbaren Kern (73), insbesondere Ringkern, aufweist.

8. Windenergieanlage nach Anspruch 2 allein oder zusammen mit einem der Ansprüche 3 bis 7,
**dadurch gekennzeichnet, dass** ein Vorsteuerungsmodul (83) vorgesehen ist, das mit einer Betriebssteuerung (2) der Windenergieanlage verbunden ist und auf den Regler (6) abhängig von dem Betriebszustand einwirkt.

9. Windenergieanlage nach einem der vorangehenden Ansprüche, **dadurch gekennzeichnet, dass** eine Überwachungseinheit (8) vorgesehen ist, die ausgebildet ist für eine Langzeitüberwachung der Kompensationssignale, und vorzugsweise ein Detektormodul (80) aufweist, welches basierend darauf ein Warnsignal bei kritischem Zustand des Maschinenlagers (4) erzeugt.

10. Windenergieanlage nach einem der vorangehenden Ansprüche, **dadurch gekennzeichnet, dass** eine Korrelation von Signalen der Lagerstromdämpfungseinheit (5) mit anderen Betriebsdaten vorgesehen ist, insbesondere von der Windenergieanlage (1) erzeugte Leistung, Netzparameter wie Netzspannung oder Netzfrequenz, und/oder Aktivität von anderen elektrischen Betriebsmitteln der Windenergieanlage.

11. Windenergieanlage nach Anspruch 9 oder 10, **dadurch gekennzeichnet, dass** die Lagerstromdämpfungseinheit (5) mit einem Wartungsmodul (82) zusammenwirkt, in dem vorzugsweise eine Condition-Monitoring-Funktion implementiert ist.

12. Lagerstromdämpfungseinheit-Nachrüstsatz (5) als Potentialausgleichseinrichtung einer Windenergieanlage mit beweglichen und stationären Komponenten einschließlich einem Windrotor (12), Generator (15) mit Umrichter (16) sowie Maschinenträger (3), wobei bewegliche Komponenten über Maschinenlager an stationären Komponenten angeordnet sind, und eine Potentialschutzeinrichtung für mindestens ein zu schützendes Maschinenlager (4) vorgesehen ist, die ausgebildet ist zur Verringerung eines parasitären Stromflusses (44) durch das Maschinenlager (4),
**dadurch gekennzeichnet, dass**
der Lagerstromdämpfungseinheit-Nachrüstsatz als Potentialausgleichseinrichtung eine aktive Lagerstromdämpfungseinheit (5) und ein Stellglied (7) aufweist, wobei die aktive Lagerstromdämpfungseinheit (5) dazu ausgebildet ist, eine Potentialdifferenz über das zu schützende Maschinenlager (4) zu erfassen und darauf basierend eine entgegengerichtete Kompensationsspannung (52) mittels des Stellglieds (7) zu erzeugen, wobei die Kompensationsspannung (52) am zu schützenden Maschinenlager (4) eingespeist wird.

13. Verfahren zum Potentialausgleich an einer Windenergieanlage mit beweglichen und stationären Komponenten einschließlich einem Windrotor (12), Generator (15) mit Umrichter (16) sowie Maschinenträger (3), wobei bewegliche Komponenten über Maschinenlager an stationären Komponenten angeordnet sind, und eine Potentialschutzeinrichtung für mindestens ein zu schützendes Maschinenlager (4) vorgesehen ist, die einen parasitären Stromfluss (44) durch das Maschinenlager (4) verringert,
**dadurch gekennzeichnet, dass**
eine aktive Lagerstromdämpfungseinheit (5) vorgesehen ist und dazu ausgebildet ist, um
- eine Potentialdifferenz über das zu schützende Maschinenlager (4) zu erfassen;
- darauf basierend eine entgegengerichtete Kompensationsspannung (52) mittels eines Stellglieds (7) zu erzeugen; und
- die Kompensationsspannung (52) am zu schützenden Maschinenlager (4) einzuspeisen.

## Claims

1. Wind turbine having movable and stationary components including a wind rotor (12), generator (15) with converter (16), and mainframe (3), movable components being arranged on stationary components by means of machine bearings, and a potential protection device being provided for at least one machine bearing (4) to be protected, which potential protection device is designed to reduce a parasitic current flow (44) through the machine bearing (4),
**characterized in that**
the potential protection device is realized as a potential equalization device, wherein the potential equalization device is realized as an active bearing-current damping unit (5) that detects a potential difference across the machine bearing (4) to be protected, and on the basis thereof, by means of an actuator (7), generates an opposing compensation voltage (52), the compensation voltage (52) being fed-in at the machine bearing (4) to be protected.

2. Wind turbine according to Claim 1, **characterized in that** the active bearing-current damping unit (5) has a closed-loop controller (6), applied to the input of which is a signal for a bearing current and/or bearing voltage of the machine bearing (4) to be protected, and to the output of which an amplifier (67) for controlling the actuator (7).

3. Wind turbine according to Claim 1 or 2, **characterized in that** the actuator (7) is realized to inject a compensation current (74) at the machine bearing (4) to be protected, a separate actuator (7) preferably being provided for each machine bearing (4) to be protected.

4. Wind turbine according to any one of the preceding claims, **characterized in that** the actuator (7) is realized as a transformer (70), which is arranged adjacently to the machine bearing (4) to be protected.

5. Wind turbine according to Claim 4, **characterized in that** its secondary side is formed, at least partly, by a surrounding structure (43) of the machine bearing (4) to be protected.

6. Wind turbine according to Claim 5, **characterized in that** the surrounding structure (43) is electrically conductive and preferably magnetic.

7. Wind turbine according to any one of Claims 4 to 6, **characterized in that** the transformer (70) is realized as a slip-on unit, which preferably has a divisible core (73), in particular toroidal core.

8. Wind turbine according to Claim 2 alone or together with any one of Claims 3 to 7, **characterized in that** a pre-control module (83) is provided, which is connected to an operation controller (2) of the wind turbine and which acts upon the closed-loop controller (6) in dependence on the operating state.

9. Wind turbine according to any one of the preceding claims, **characterized in that** a monitoring unit (8) is provided, which is designed for long-term monitoring of the compensation signals, and preferably has a detector module (80) that, on the basis thereof, generates a warning signal in the case of a critical state of the machine bearing (4).

10. Wind turbine according to any one of the preceding claims, **characterized in that** a correlation of signals of the bearing-current damping unit (5) with other operating data is provided, in particular power generated by the wind turbine (1), grid parameters such as grid voltage or grid frequency, and/or activity of other items of electrical equipment of the wind turbine.

11. Wind turbine according to Claim 9 or 10, **characterized in that** the bearing-current damping unit (5) acts in combination with a maintenance module (82) in which a condition monitoring function is preferably implemented.

12. Retrofit kit for a bearing-current damping unit (5) as potential equalization device of a wind turbine having movable and stationary components including a wind rotor (12), generator (15) with converter (16), and mainframe (3), movable components being arranged on stationary components by means of machine bearings, and a potential protection device being provided for at least one machine bearing (4) to be protected, which potential protection device is designed to reduce a parasitic current flow (44) through the machine bearing (4),
**characterized in that**
the retrofit kit for a bearing-current damping unit as potential equalization device has an active bearing-current damping unit (5) and an actuator (7), wherein the active bearing-current damping unit (5) is designed to detect a potential difference across the machine bearing (4) to be protected, and on the basis thereof, by means of the actuator (7), to generate an opposing compensation voltage (52), the compensation voltage (52) being fed-in at the machine bearing (4) to be protected.

13. Method for potential equalization on a wind turbine having movable and stationary components including a wind rotor (12), generator (15) with converter (16), and mainframe (3), movable components being arranged on stationary components by means of machine bearings, and a potential protection device being provided for at least one machine bearing (4) to be protected, which potential protection device reduces a parasitic current flow (44) through the machine bearing (4),
**characterized in that**
an active bearing-current damping unit (5) is provided and is designed in order
- to detect a potential difference across the machine bearing (4) to be protected;
- on the basis thereof, by means of an actuator (7), to generate an opposing compensation voltage (52); and
- to feed-in the compensation voltage (52) at the machine bearing (4) to be protected.

## Revendications

1. Eolienne comprenant des composants mobiles et des composants stationnaires, y compris un rotor d'éolienne (12), un générateur (15) avec un convertisseur (16) ainsi qu'un support de machine (3), les composants mobiles étant disposés sur les composants stationnaires par l'intermédiaire de paliers de machine, et un dispositif de protection de potentiel pour au moins un palier de machine (4) à protéger étant prévu qui est réalisé pour diminuer un flux de courant (44) parasite à travers le palier de machine (4),
**caractérisée en ce que** le dispositif de protection de potentiel est réalisé sous la forme d'un dispositif d'égalisation de potentiel, le dispositif d'égalisation de potentiel étant réalisé sous la forme d'une unité d'atténuation de courant de palier active (5) qui détecte une différence de potentiel à travers le palier de machine (4) à protéger et génère sur cette base une tension de compensation inverse (52) au moyen d'un actionneur (7), la tension de compensation (52) étant alimentée au niveau du palier de machine (4) à protéger.

2. Eolienne selon la revendication 1, **caractérisée en ce que** l'unité d'atténuation de courant de palier active (5) présente un régulateur (6) à l'entrée duquel est appliqué un signal pour un courant de palier et/ou une tension de palier du palier de machine (4) à protéger et à la sortie duquel est appliqué un amplificateur (67) servant à piloter l'actionneur (7).

3. Eolienne selon la revendication 1 ou 2, **caractérisée en ce que** l'actionneur (7) est réalisé pour injecter un courant de compensation (74) au niveau du palier de machine (4) à protéger, dans laquelle de préférence un actionneur propre (7) est prévu pour chaque palier de machine (4) à protéger.

4. Eolienne selon l'une quelconque des revendications précédentes, **caractérisée en ce que** l'actionneur (7) est réalisé sous la forme d'un transformateur (70) qui est voisin du palier de machine (4) à protéger.

5. Eolienne selon la revendication 4, **caractérisée en ce que** le côté secondaire de celle-ci est formé au moins partiellement par une structure environnante (43) du palier de machine (4) à protéger.

6. Eolienne selon la revendication 5, **caractérisée en ce que** la structure environnante (43) est électriquement conductrice et de préférence magnétique.

7. Eolienne selon l'une quelconque des revendications 4 à 6, **caractérisée en ce que** le transformateur (70) est réalisé sous la forme d'une unité à emboîtement qui présente de préférence un noyau divisible (73), en particulier un noyau annulaire.

8. Eolienne selon la revendication 2 seule ou en combinaison avec l'une des revendications 3 à 7, **caractérisée en ce qu'**un module de commande pilote (83) est prévu qui est relié à une commande d'exploitation (2) de l'éolienne et qui agit sur le régulateur (6) en fonction de l'état de fonctionnement.

9. Eolienne selon l'une quelconque des revendications précédentes, **caractérisée en ce qu'**une unité de surveillance (8) est prévue qui est réalisée pour une surveillance à long terme des signaux de compensation, et qui présente de préférence un module de détection (80) qui génère sur cette base un signal d'alarme en cas d'état critique du palier de machine (4).

10. Eolienne selon l'une quelconque des revendications précédentes, **caractérisée en ce qu'**une corrélation des signaux de l'unité d'atténuation de courant de palier (5) avec d'autres données de fonctionnement est prévue, en particulier avec la puissance générée par l'éolienne (1), des paramètres de réseau, tels que la tension du réseau ou la fréquence du réseau, et/ou l'activité d'autres ressources électriques de l'éolienne.

11. Eolienne selon la revendication 9 ou 10, **caractérisée en ce que** l'unité d'atténuation de courant de palier (5) coopère avec un module d'entretien (82) dans lequel de préférence une fonction de surveillance d'état est mise en œuvre.

12. Kit de mise à niveau (5) pour une unité d'atténuation de courant de palier sous la forme d'un dispositif d'égalisation de potentiel d'une éolienne comprenant des composants mobiles et des composants stationnaires, y compris un rotor d'éolienne (12), un générateur (15) avec un convertisseur (16) ainsi que des supports de machine (3), les composants mobiles étant disposés sur les composants stationnaires par l'intermédiaire de paliers de machine, et un dispositif de protection de potentiel pour au moins un palier de machine (4) à protéger étant prévu qui est réalisé pour diminuer un flux de courant parasite (44) à travers le palier de machine (4),
**caractérisé en ce que** le kit de mise à niveau pour une unité d'atténuation de courant de palier sous la forme d'un dispositif d'égalisation de potentiel présente une unité d'atténuation de courant de palier active (5) et un actionneur (7), l'unité d'atténuation de courant de palier active (5) étant réalisée pour détecter une différence de potentiel à travers le palier de machine (4) à protéger, et pour générer sur cette base une tension de compensation inverse (52) au moyen de l'actionneur (7), la tension de compensation (52) étant alimentée au niveau du palier de machine (4) à protéger.

13. Procédé d'égalisation de potentiel sur une éolienne comprenant des composants mobiles et des composants stationnaires y compris un rotor d'éolienne (12), un générateur (15) avec un convertisseur (16) ainsi que des supports de machine (3), les composants mobiles étant disposés sur les composants stationnaires par l'intermédiaire de paliers de machine, et un dispositif de protection de potentiel pour au moins un palier de machine (4) à protéger étant prévu qui diminue un flux de courant parasite (44) par le palier de machine (4),
**caractérisé en ce qu'**une unité d'atténuation de courant de palier active (5) est prévue et réalisée pour
- détecter une différence de potentiel à travers le palier de machine (4) à protéger ;
générer sur cette base une tension de compensation inverse (52) au moyen d'un actionneur (7) ; et
- alimenter la tension de compensation (52) au niveau du palier de machine (4) à protéger.
